# FASCICULE DE BREVET EUROPEEN

(11) **EP 3 314 131 B1**
(45) Date de publication et mention de la délivrance du brevet: **17.11.2021**
(21) Numéro de dépôt: 16735913.2
(22) Date de dépôt: 14.06.2016
(51) Int. Cl.: F04D 29/56, F01D 17/16

(54) **SYSTÈME DE COMMANDE D'AUBES À CALAGE VARIABLE POUR UNE TURBOMACHINE**
SYSTEM ZUR STEUERUNG VON SCHAUFELN MIT VARIABLEN EINSTELLUNGEN FÜR EINEN TURBINENMOTOR
SYSTEM FOR CONTROLLING VARIABLE-SETTING BLADES FOR A TURBINE ENGINE

(30) Priorité: 25.06.2015 FR 1555846
(43) Date de publication de la demande: 02.05.2018
(73) Titulaire: Safran Aircraft Engines, 75015 Paris (FR)
(72) Inventeur: BROMANN, Alain, Marc, Lucien, 77550 Moissy-Cramayel Cedex (FR); BENDERRADJI, Kamel, 77550 Moissy-Cramayel Cedex (FR); DUMAS, Lilian, Yann, 77550 Moissy-Cramayel Cedex (FR); REICHERT, Pamela, Dominique, Danièle, 77550 Moissy-Cramayel Cedex (FR)
(74) Mandataire: Gevers & Orès
(86) Numéro de dépôt international: PCT/FR2016/051433
(87) Numéro de publication internationale: WO 2016/207513

(56) Documents cités:
- EP-A1- 1 489 267
- EP-A2- 0 909 880
- FR-A1- 2 983 924
- JP-U- S6 119 640

## Description

### DOMAINE TECHNIQUE

La présente invention concerne un système de commande d'aubes à calage variable pour une turbomachine.

### ETAT DE L'ART

L'état de l'art comprend notamment les documents FR-B1-2 885 968, FR-A1-2 928 979, JP-U-S61 19640, EP-A1-1 489 267, FR-A1-2 983 924 et EP-A2-0 909 880 et WO-A1 -2009/133297.

Dans la présente demande, on définit l'axe (longitudinal) de la turbomachine comme étant l'axe de rotation du ou des rotors de son moteur, et en particulier des rotors de ses corps basse et haute pression dans le cas d'une turbomachine à double corps. Les termes tels que interne, externe, radial, axial, etc., font référence à la position d'une pièce par rapport à cet axe.

Les aubes de stator à calage variable (aussi appelées VSV - acronyme de *Variable Stator Vanes*) d'une turbomachine sont portées par un carter annulaire externe, en général d'un compresseur de la turbomachine. Chaque aube comprend une pale qui est reliée à son extrémité radialement externe à un pivot cylindrique radial qui définit l'axe de rotation de l'aube et qui est guidé en rotation dans un orifice correspondant du carter externe. L'extrémité radialement interne de la pale de chaque aube comprend en général un second pivot cylindrique s'étendant le long de l'axe de rotation de l'aube et guidé en rotation dans un orifice d'un carter interne du compresseur.

L'extrémité radialement externe du pivot externe de chaque aube est reliée par un levier à un anneau de commande déplacé en rotation autour du carter externe par des moyens d'actionnement à vérin ou analogue. La rotation de l'anneau de commande est transmise par les leviers aux pivots externes des aubes et les fait tourner autour de leurs axes.

Le calage angulaire des aubes de stator dans une turbomachine est destiné à adapter la géométrie du compresseur à son point de fonctionnement et notamment à optimiser le rendement et la marge au pompage de cette turbomachine et à réduire sa consommation de carburant dans les différentes configurations de vol.

Chacune de ces aubes est déplaçable en rotation autour de son axe entre une première position « d'ouverture » ou « de pleine ouverture » dans laquelle chaque aube s'étend sensiblement parallèlement à l'axe longitudinal de la turbomachine, et une seconde position « de fermeture » ou « de quasi-fermeture » dans laquelle les aubes sont inclinées par rapport à l'axe de la turbomachine et réduisent ainsi la section de passage de l'air à travers l'étage d'aubes.

Dans la technique actuelle, les moyens d'actionnement sont reliés à un ou plusieurs anneaux de commande par des moyens de liaison relativement complexes et encombrants. Ces moyens de liaison comprennent en général un grand nombre de pièces et des jeux de montage relativement importants, ce qui amène un maximum d'hystérésis dans tous les domaines de vols.

La présente invention propose un perfectionnement à cette technologie antérieure, qui permet de résoudre au moins une partie des problèmes précités.

### EXPOSE DE L'INVENTION

L'invention propose un système de commande d'aubes à calage variable pour une turbomachine, comportant au moins un anneau de commande monté mobile en rotation autour d'un carter annulaire d'axe A de révolution, au moins une rangée annulaire d'aubes à calage variable s'étendant sensiblement radialement par rapport audit axe A et reliées audit au moins un anneau de commande afin qu'une rotation de l'anneau autour du carter entraîne une rotation des aubes autour d'axes B sensiblement radiaux, et des moyens d'actionnement dudit au moins un anneau pour le déplacer en rotation autour du carter, lesdits moyens d'actionnement étant reliés audit au moins un anneau par des moyens de liaison comprenant un arbre s'étendant le long d'un axe C sensiblement radial par rapport audit axe A et monté mobile en rotation autour dudit axe C sur le carter, caractérisé en ce que ledit arbre comprend une extrémité radialement interne montée sur le carter par une liaison pivot ou rotulante, et une extrémité radialement externe reliée par une liaison pivot ou rotulante à un bras fixe solidaire d'un ou du carter.

L'orientation radiale de l'arbre de liaison permet de limiter l'encombrement (et donc la masse) des moyens de liaison ainsi que du système de commande dans son ensemble. Cela peut permettre notamment de rapprocher les moyens d'actionnement du ou des anneaux de commande. Cela permet en outre de minimiser les jeux et de réduire le nombre de pièces du système, afin d'avoir un réglage optimum plus précis pour satisfaire le besoin des lois demandées par l'aérodynamique.

La liaison de l'arbre à un ou des carters permet de mieux faire transiter les efforts vers ce ou ces carters. La liaison de l'extrémité radialement externe du bras au carter permet par exemple la reprise des efforts appliqués à l'arbre radial en fonctionnement.

Le système selon l'invention peut comprendre une ou plusieurs des caractéristiques suivantes, prises isolément les unes des autres ou en combinaison les unes avec les autres :
- ledit arbre comprend une première chape de liaison par un premier ridoir à un premier anneau de commande,
- ledit arbre comprend une seconde chape de liaison par un second ridoir à un second anneau de commande,
- ledit arbre est situé entre lesdits premier et second anneaux,
- lesdites première et seconde chapes sont diamétralement opposées par rapport audit axe C,
- ladite première chape ou chacune desdites première et seconde chapes porte un axe d'articulation du ridoir correspondant, qui est sensiblement radial par rapport audit axe A,
- ledit bras s'étend sensiblement parallèlement audit axe A,
- ledit bras comprend une première extrémité longitudinale de liaison audit arbre et une seconde extrémité longitudinale opposée de fixation audit carter, qui est de préférence un carter intermédiaire fixé audit carter annulaire, et
- ladite seconde extrémité comprend une platine de fixation audit carter.

La présente invention concerne également une turbomachine, caractérisée en ce qu'elle comprend au moins un système tel que décrit ci-dessus.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une demi-vue schématique partielle en coupe axiale d'un système de commande d'aubes à calage variable de turbomachine, selon la technique antérieure ;
- la figure 2 est une vue schématique partielle en perspective d'un système de commande d'aubes à calage variable de turbomachine, selon l'invention ; et
- la figure 3 est une vue très schématique d'un système de commande selon l'invention.

### DESCRIPTION DETAILLEE

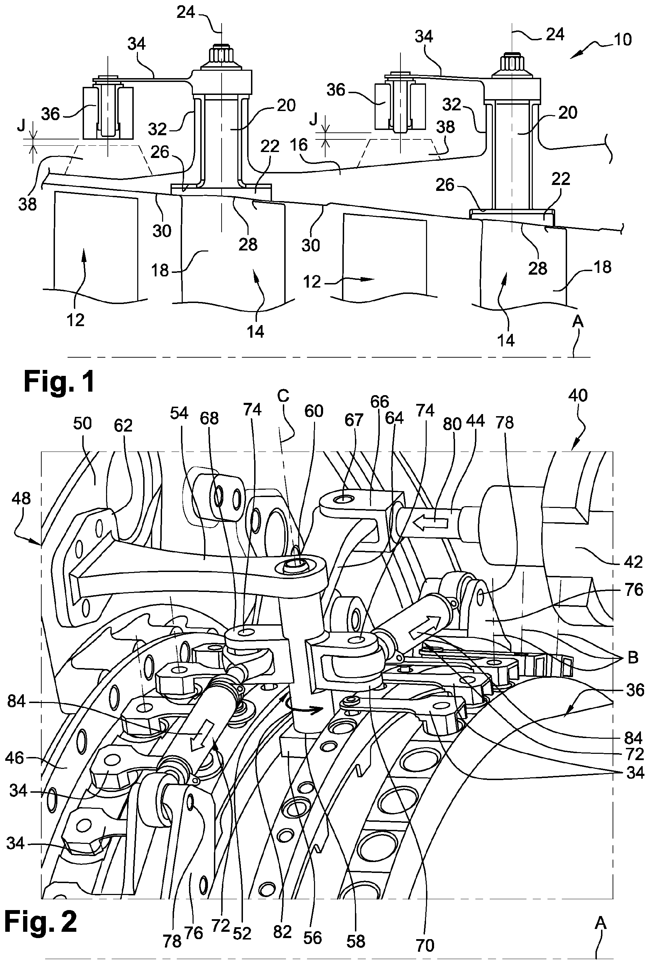

En figure 1, on a représenté schématiquement, en coupe axiale, une partie d'un compresseur haute-pression 10 d'une turbomachine, en particulier d'une turbomachine d'aéronef, à plusieurs étages, chaque étage comprenant une rangée annulaire d'aubes mobiles 12 portées par le rotor (non représenté) de la turbomachine et une rangée annulaire d'aubes fixes 14 formant redresseurs portées par un carter 16 du stator de la turbomachine, l'orientation angulaire des aubes 14 étant réglable pour optimiser l'écoulement gazeux dans le compresseur 10.

Chaque aube 14 comprend une pale 18 et un pivot cylindrique 20 radialement externe, relié par un disque ou « platine » 22 s'étendant perpendiculairement à l'axe 24 de l'aube dans un logement 26 correspondant du carter 16. La surface radialement interne 28 du disque est alignée avec la paroi interne 30 du carter pour ne pas s'opposer à l'écoulement gazeux.

Dans la technique antérieure, le pivot cylindrique 20 de chaque aube 14 s'étend à l'intérieur d'une cheminée cylindrique radiale 32 du carter 16 et son extrémité radialement externe est reliée par un levier 34 à un anneau de commande 36 qui entoure le carter 16 et qui est relié à des moyens d'actionnement (non représentés) permettant de le faire tourner dans un sens ou dans l'autre autour de l'axe longitudinal du carter 16 pour entraîner les aubes 14 d'une rangée annulaire en rotation autour de leurs axes 24.

Les aubes 14 sont déplaçables en rotation autour de leurs axes 24 entre une position dite de pleine fermeture et une position dite de pleine ouverture.

Dans la position de pleine fermeture, les pales 18 des aubes 14 sont inclinées par rapport à l'axe longitudinal de la turbomachine, c'est-à-dire que la corde de chaque aube (ligne qui relie le bord d'attaque au bord de fuite) est sensiblement perpendiculaire à l'axe longitudinal de la turbomachine. Les pales 18 définissent entre elles une section minimale de passage d'air dans la veine. Les aubes 14 sont amenées dans cette position lorsque la turbomachine est à bas régime ou au ralenti, le débit d'air s'écoulant dans le compresseur ayant alors une valeur minimale.

Dans la position de pleine ouverture, les pales 18 des aubes 14 s'étendent sensiblement parallèlement à l'axe de la turbomachine, c'est-à-dire que la corde de chaque aube est sensiblement parallèle à l'axe longitudinal de la turbomachine. La section de passage d'air entre les pales 18 est alors maximale. Les aubes 14 sont amenées dans cette position lorsque la turbomachine est au régime plein gaz, le débit d'air s'écoulant dans le compresseur ayant alors une valeur maximale.

Le carter 16 peut comprendre à sa périphérie externe des pistes 38 en saillie de centrage et de guidage des anneaux 36, qui sont ici schématiquement représentées par des traits pointillés. Chaque anneau 36 entoure sa ou ses pistes de guidage 38. La référence J désigne les jeux radiaux qui sont prévus à froid entre un anneau 36 et sa ou ses pistes 38. Ces jeux J doivent être suffisamment importants pour permettre des dilatations thermiques du carter 16 mais ne permettent pas de régler avec précision les positions angulaires des aubes 14. Ces jeux J sont réglés au moyen de cales lors du montage du système de commande.

L'invention propose un perfectionnement des moyens de liaison des moyens d'actionnement à un ou plusieurs anneaux de commande.

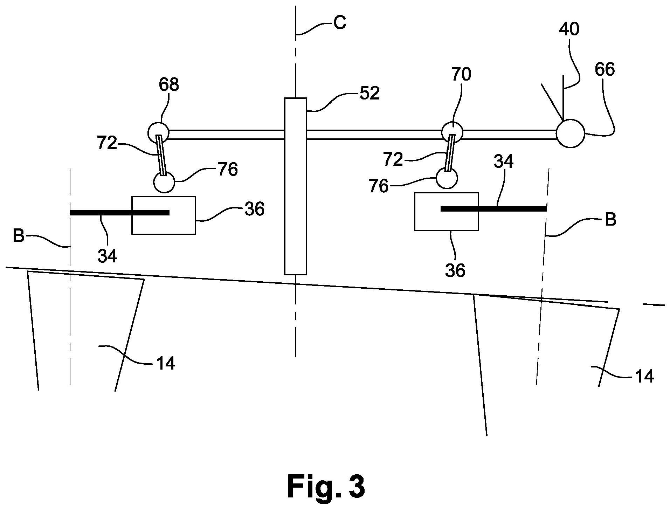

La figure 2 représente un mode de réalisation de l'invention, qui est représentée de manière très schématique en figure 3.

Selon l'invention, ces moyens de liaison comprennent un arbre radial 52 qui est monté mobile sur le carter autour d'un axe radial C (figure 2).

Dans l'exemple de réalisation représenté aux figures 2 et 3, les moyens d'actionnement comprennent un vérin 40, par exemple hydraulique, comportant un corps 42 fixé au carter 16 et une tige de piston 44. Le vérin 40 est monté sur le carter 16 de façon à ce que sa tige de piston 44 s'étende sensiblement parallèlement à un axe A de révolution du carter 16.

Le carter 16 a ici une forme sensiblement cylindrique et comprend à une extrémité longitudinale une bride annulaire 46 de fixation à un autre carter annulaire 48 de la turbomachine, tel qu'un carter intermédiaire bien connu de l'homme du métier. Ce type de carter est monté entre un compresseur basse-pression et un compresseur haute-pression de la turbomachine. Seule une paroi 50 sensiblement radiale du carter intermédiaire 48 est visible en figure 2. Le vérin 40 est monté sur le carter 16 et en aval du carter intermédiaire 48 (ou sur un autre carter non visible), sa tige de piston 44 s'étendant depuis le corps 42 en direction du carter intermédiaire 48.

L'arbre 52 a des moyens de liaison suivant une orientation sensiblement radiale, c'est-à-dire qu'il s'étend le long d'un axe C sensiblement radial (ou perpendiculaire) par rapport à l'axe A de révolution du carter 16 et de rotation des anneaux de commande 36 montés autour du carter 16 ou sur la bride 46.

L'arbre 52 a une forme générale sensiblement cylindrique et comprend une extrémité radialement interne montée mobile en rotation sur le carter 16 et une extrémité radialement externe qui est montée également mobile en rotation à une extrémité d'un bras 54 solidaire du carter intermédiaire 48, comme représenté en figure 2.

Le carter 16 comporte ici un bossage 56 portant des moyens 58 de liaison à pivot ou de liaison rotulante à l'extrémité radialement interne de l'arbre 52. Ces moyens de liaison comprennent par exemple au moins un palier d'axe C de rotation ou au moins une rotule. L'extrémité radialement interne de l'arbre 52 porte par exemple une portion sphérique ou un axe engagé dans un évidement d'une portion sphérique, qui est logée dans une cavité sphérique du bossage 56.

De la même façon, le bras 54 porte des moyens 60 de liaison à pivot ou de liaison rotulante à l'extrémité radialement externe de l'arbre 52. Ces moyens de liaison comprennent par exemple au moins un palier d'axe C de rotation ou au moins une rotule. L'extrémité radialement interne de l'arbre 52 porte par exemple une portion sphérique ou un axe engagé dans un évidement d'une portion sphérique, qui est logée dans une cavité sphérique du bossage 56.

Le bras 54 a une forme allongée et s'étend sensiblement parallèlement à l'axe A. Il comprend à son extrémité amont une platine 62 de fixation sur le carter intermédiaire 48 et à son extrémité aval lesdits moyens de liaison 60.

L'arbre 52 comprend un levier 64 de liaison à la tige de piston 44 du vérin 40. Le levier 64 a une forme allongée et s'étend dans une direction sensiblement perpendiculaire à l'axe C. Il a une extrémité reliée à l'arbre 52, au voisinage de l'extrémité radialement externe de ce dernier, et une extrémité opposée articulée à la tige de piston 44. Cette extrémité opposée du levier 64 est engagée entre les oreilles d'une chape 66 prévue à l'extrémité libre de la tige de piston 44, et est articulée par une liaison rotule ou à pivot sur un axe 67 porté par la chape 66. Le levier 64 peut être formé d'une seule pièce avec l'arbre 52. L'axe 67 a une orientation sensiblement radiale.

L'arbre 52 comprend de plus deux chapes 68, 70, ici diamétralement opposées et situées sensiblement à mi-hauteur (mesurée en direction radiale) de l'arbre 52. Les chapes 68, 70 s'étendent respectivement vers l'amont et l'aval depuis l'arbre 52. Les chapes 68, 70 sont formées d'une seule pièce avec l'arbre 52.

Chaque chape 68, 70 comprend deux oreilles entre lesquelles est montée une extrémité d'un ridoir 72 et portent un axe 74 d'articulation de cette extrémité. Les axes 74 ont chacun une orientation sensiblement radiale.

Chaque ridoir 72 permet de commander un anneau de commande 36. L'extrémité du ridoir 72, opposée à l'arbre 52, est ainsi articulée sur une chape 76 portée par l'anneau 36 correspondant. Chaque chape 76 porte un axe 78 d'articulation de cette extrémité, qui a une orientation sensiblement axiale. Les ridoirs 72 sont bien connus de l'homme du métier et ne seront donc pas décrits.

Comme on le voit en figure 2, l'arbre 52 est situé entre les deux anneaux de commande 36 reliés à cet arbre 52. Chaque anneau 36 passe dans l'espace radial s'étendant entre le carter et la chape 68, 70 reliée à cet anneau. Chaque ridoir 72 a une orientation sensiblement tangentielle par rapport à une circonférence centrée sur l'axe A et s'étend sensiblement dans le plan de l'anneau 36 correspondant, qui est perpendiculaire à l'axe A.

En fonctionnement, le vérin 40 actionne sa tige de piston 44 ce qui engendre une rotation de l'arbre 52 autour de son axe C, par l'intermédiaire du levier 64. Dans le cas où un déplacement de la tige 44 a lieu vers le carter intermédiaire 48, c'est-à-dire vers l'amont (flèche 80), le levier et l'arbre tourne dans le sens anti-horaire (flèche 82). La rotation de l'arbre 52 va provoquer un écartement circonférentiel des ridoirs et des déplacements en rotation des anneaux 36 dans des sens opposés (flèches 84). La rotation de chaque anneau 36 provoque un déplacement en rotation de chaque aube autour de son axe B. Les efforts du système sont repris par le bras 54.

## Revendications

1. Système de commande d'aubes (14) à calage variable pour une turbomachine, comportant au moins un anneau de commande (36) monté mobile en rotation autour d'un carter annulaire (16) d'axe A de révolution, au moins une rangée annulaire d'aubes (14) à calage variable s'étendant sensiblement radialement par rapport audit axe A et reliées audit au moins un anneau de commande afin qu'une rotation de l'anneau autour du carter entraîne une rotation des aubes autour d'axes B sensiblement radiaux, et des moyens (40) d'actionnement dudit au moins un anneau pour le déplacer en rotation autour du carter, lesdits moyens d'actionnement étant reliés audit au moins un anneau par des moyens de liaison comprenant un arbre (52) s'étendant le long d'un axe C sensiblement radial par rapport audit axe A et monté mobile en rotation autour dudit axe C sur le carter, **caractérisé en ce que** ledit arbre (52) comprend une extrémité radialement interne montée sur le carter (16) par une liaison pivot ou rotulante, et une extrémité radialement externe reliée par une liaison pivot ou rotulante à un bras (54) fixe solidaire du carter annulaire (16) ou d'un autre carter (48).

2. Système selon la revendication précédente, dans lequel ledit arbre (52) comprend une première chape (68) de liaison par un premier ridoir (72) à un premier anneau de commande (36).

3. Système selon la revendication précédente, dans lequel ledit arbre (52) comprend une seconde chape (70) de liaison par un second ridoir (72) à un second anneau de commande (36).

4. Système selon la revendication précédente, dans lequel ledit arbre (52) est situé entre lesdits premier et second anneaux (36).

5. Système selon la revendication 3 ou 4, dans lequel lesdites première et seconde chapes (68, 70) sont diamétralement opposées par rapport audit axe C.

6. Système selon l'une des revendications 2 à 5, dans lequel ladite première chape (68) ou chacune desdites première et seconde chapes (68, 70) porte un axe (74) d'articulation du ridoir (72) correspondant, qui est sensiblement radial par rapport audit axe A.

7. Système selon l'une des revendications précédentes, dans lequel ledit bras (54) s'étend sensiblement parallèlement audit axe A.

8. Système selon l'une des revendications précédentes, dans lequel ledit bras (54) comprend une première extrémité longitudinale de liaison audit arbre (52) et une seconde extrémité longitudinale opposée de fixation audit autre carter (48), qui est de préférence un carter intermédiaire fixé audit carter annulaire (16).

9. Système selon l'une des revendications précédentes, dans lequel ladite seconde extrémité comprend une platine (62) de fixation audit autre carter (48).

10. Turbomachine pour aéronef, comportant au moins un système selon l'une des revendications précédentes.

## Patentansprüche

1. System zur Steuerung von Schaufeln (14) mit variabler Feststellposition für eine Turbomaschine, mindestens einen Verstellring (36) umfassend, der drehbar um ein ringförmiges Gehäuse (16) mit einer Drehachse A montiert ist, mindestens eine ringförmige Reihe von Schaufeln (14) mit variabler Feststellposition, die sich im Wesentlichen radial in Bezug auf die A-Achse erstrecken und mit dem mindestens einen Verstellring verbunden ist, so dass eine Drehung des Rings um das Gehäuse eine Drehung der Schaufeln um im Wesentlichen radiale B-Achsen bewirkt, und Mitteln (40) zur Betätigung des mindestens einen Rings, um ihn in Drehung um das Gehäuse zu versetzen, wobei die Betätigungsmittel mit dem mindestens einen Ring durch Verbindungsmittel verbunden sind, die eine Welle (52) umfassen, die sich entlang einer Achse C erstreckt, die in Bezug auf die A-Achse im Wesentlichen radial ist, und die drehbar um die C-Achse am Gehäuse montiert ist, **dadurch gekennzeichnet, dass** die Welle (52) ein radial inneres Ende, dass über eine Schwenk- oder Kugelgelenkverbindung an dem Gehäuse (16) montiert ist, und ein radial äußeres Ende umfasst, dass über eine Schwenk- oder Kugelgelenkverbindung mit einem festen Arm (54) verbunden ist, der mit dem ringförmigen Gehäuse (16) oder einem anderen Gehäuse (48) fest verbunden ist.

2. System nach dem vorstehenden Anspruch, wobei die Welle (52) einen ersten Gabelkopf (68) zur Verbindung durch ein erstes Spannschloss (72) mit einem ersten Verstellring (36) umfasst.

3. System nach dem vorstehenden Anspruch, wobei die Welle (52) einen zweiten Gabelkopf (70) zur Verbindung durch ein zweites Spannschloss (72) mit einem zweiten Verstellring (36) umfasst.

4. System nach dem vorstehenden Anspruch, wobei die Welle (52) zwischen dem ersten und dem zweiten Ring (36) angeordnet ist.

5. System nach Anspruch 3 oder 4, wobei der erste und der zweite Gabelkopf (68, 70) in Bezug auf die C-Achse diametral entgegengesetzt sind.

6. System nach einem der Ansprüche 2 bis 5, wobei der erste Gabelkopf (68) oder jeder des ersten und zweiten Gabelkopfes (68, 70) einen Gelenkbolzen (74) für das entsprechende Spannschloss (72) aufweist, der im Wesentlichen radial zur A-Achse verläuft.

7. System nach einem der vorstehenden Ansprüche, wobei sich der Arm (54) im Wesentlichen parallel zur A-Achse erstreckt.

8. System nach einem der vorstehenden Ansprüche, wobei der Arm (54) ein erstes Längsende zur Verbindung mit der Welle (52) und ein zweites, gegenüberliegendes Längsende zur Befestigung an dem anderen Gehäuse (48) umfasst, bei dem es sich vorzugsweise um ein an dem ringförmigen Gehäuse (16) befestigtes Zwischengehäuse handelt.

9. System nach einem der vorstehenden Ansprüche, wobei das zweite Ende eine Platte (62) zur Befestigung an dem anderen Gehäuse (48) umfasst.

10. Turbomaschine für Luftfahrzeug, die mindestens ein System nach einem der vorstehenden Ansprüche umfasst.

## Claims

1. System for controlling variable pitch vanes (14) for a turbine engine, comprising at least one control ring (36) mounted to freely rotate about an annular casing (16) with an axis A of revolution, at least one annular row of variable pitch vanes (14) extending substantially radially relative to said axis A and being connected to said at least one control ring so that a rotation of the ring about the casing sets the vanes into rotation about substantially radial axes B, and means (40) for actuating said at least one ring so as to rotate it about the casing, said actuation means being connected to said at least one ring by linking means comprising a shaft (52) extending along an axis C that is substantially radial relative to said axis A and is mounted to freely rotate about said axis C on the casing, **characterised in that** said shaft (52) comprises a radially internal end mounted on the casing (16) by a pivot link or ball joint link and a radially external end connected by a pivot link or ball joint link to a fixed arm (54) secured to the annular casing (16) or to an other casing (48).

2. System according to the preceding claim, wherein said shaft (52) comprises a first clevis (68) for linking, via a first tensioner (72), to a first control ring (36).

3. System according to the preceding claim, wherein said shaft (52) comprises a second clevis (70) for linking, via a second tensioner (72), to a second control ring (36).

4. System according to the preceding claim, wherein said shaft (52) is located between said first and second rings (36).

5. System according to either claim 3 or claim 4, wherein said first and second clevises (68, 70) are diametrically opposed relative to said axis C.

6. System according to any of claims 2 to 5, wherein said first clevis (68) or each of said first and second clevises (68, 70) supports an articulation shaft (74) of the corresponding tensioner (72), which is substantially radial relative to said axis A.

7. System according to any of the preceding claims, wherein said arm (54) extends substantially parallel to said axis A.

8. System according to any of the preceding claims, wherein said arm (54) comprises a first longitudinal end for linking to said shaft (52) and a second opposite longitudinal end for fixing to said other casing (48), which preferably is an intermediate casing fixed to said annular casing (16).

9. System according to any of the preceding claims, wherein said second end comprises a plate (62) for fixing to said other casing (48).

10. Turbine engine for aircraft, comprising at least one system according to any of the preceding claims.
